# EUROPEAN PATENT APPLICATION

(11) **EP 2 110 228 A1**
(43) Date of publication of application: **21.10.2009**
(21) Application number: 09157974.8
(22) Date of filing: 15.04.2009
(51) Int. Cl.: B29C 67/00, B27D 5/00

(54) **Method and machine for preparing a panel to the edge-banding**

(30) Priority: 15.04.2008 IT MO20080106
(71) Applicant: SCM Group S.p.A., 47900 Rimini (IT)
(72) Inventor: Coltro, Davide, 36010, Monticello Conte Otto (VI) (IT); Greselin, Stefano, 36050, Bolzano Vicentino (VI) (IT); Busa, Aldo, 36030, Zugliano (VI) (IT)
(74) Representative: Crugnola, Pietro

(57) **Abstract**

A method for preparing to the edge-banding a panel (1) made of wood or similar materials, in particular a composite panel (1) with a light structure provided with an intermediate layer (3) interposed between a first layer (4) and a second layer (5), comprises forming in an edge portion (11) of said panel (1) seat means (12) and, after said forming, injecting into said seat means (12) a hardening expanding composition (15) such as to, once said composition (15) is expanded, substantially fill said seat means (12) and form in said seat means (12) a supporting element for an edge element (10) that is fixable to said panel (1).

## Description

The invention relates to a method and a machine for preparing to the edge-banding a panel, in particular a composite panel with a light structure.

The invention further relates to a method for edge-banding a panel comprising the aforesaid method for preparing to the edge-banding a panel, a plant for edge-banding a panel comprising the aforesaid machine for preparing to the edge-banding a panel, and a panel obtained by this method for edge-banding a panel.

In the woodworking industry "preparing to the edge-banding a panel" is defined as the machinings to be performed on perimetrical sides of the panel before a decorative edge element is applied to the panel, for example a strip or band of plastics or similar materials.

Composite panels with a light structure are known, which are for example usable for making furniture, shelving, shelves, doors and the like, which are provided with a layered or "sandwich" structure.

This structure comprises an intermediate layer interposed between a first external layer and a second external layer, that are substantially flat and mutually opposite, made of wood or similar materials.

The intermediate layer is made of a filling material, such as, for example, a sheet of cardboard having a honeycomb structure that is lighter and less resistant than the material used to make the first and the second external layer.

A method is known for preparing panels of the type disclosed above to the edge-banding that comprises using a machine that is provided with a milling unit and with a fixing unit positioned one after the other along a production line.

This method comprises, after the panel has been cut to size, a milling step in which milling the perimetrical sides of lesser thickness of the panel is provided, by a milling cutter with which the milling unit is provided, so as to obtain at such perimetrical sides and along such perimetrical sides a longitudinal groove, having, for example, a rectangular or trapezoidal cross section.

In particular, this groove is obtained by milling the intermediate layer and by partially milling the first layer and the second layer so as to form in the first layer and the second layer respective mutually facing notches.

These notches, in use, act as stopping seats for a supporting element, or a list, made of wood or similar materials, having a cross section that has the same shape as that of the groove and arranged for reinforcing and strengthening the perimetrical sides of the panel and for supporting the aforesaid decorative edge element.

Subsequently, the aforesaid method comprises a fixing step in which fixing the supporting element in the groove by the fixing unit is provided, this fixing unit comprising cutting means, a glue distributor and a pressing roller.

In particular, this fixing step comprises a cutting step, in which cutting to a desired length the supporting element is provided by the cutting means, a glue-distributing step in which a layer of glue is distributed in the aforesaid notches, and an inserting step in which inserting the supporting element into the notches and pressing the supporting element against the notches is provided by the pressing roller.

A drawback of the aforesaid method is that it is expensive to apply.

This is due to the cost to be sustained for purchasing the supporting element, which is made of a particularly expensive material.

A further drawback of the aforesaid method is that it is laborious and difficult to apply, which entails a reduced productivity with consequent loss of money.

This is due to the step of fixing the supporting element in the groove, this fixing step being particularly delicate and complicated to implement.

Further, in the supporting element of the panel prepared to the edge-banding by the method disclosed above it is not possible to insert threaded inserts for hardware elements, such as hinges or handles.

This is in particular due to the reduced thickness of the supporting element.

Also, as such supporting element is very flexible to compression, it does not enable the edge element to be appropriately supported.

A drawback of the machine disclosed above for preparing to the edge-banding a panel is that it is expensive and complicated to make.

This is particular due to the fixing unit comprising the cutting means, the glue distributor and the pressing roller. An object of the invention is to improve the methods and the machines for preparing to the edge-banding a panel made of wood or similar materials, in particular a composite panel with a light structure.

A further object is to provide a method for preparing to the edge-banding a panel, which method is simpler and cheaper to apply than known methods.

Another object of the invention is to provide a machine for preparing to the edge-banding a panel made of wood or similar materials, in particular a composite panel, which machine is less expensive and easier to make than known machines.

In a first aspect of the invention there is provided a method for preparing to the edge-banding a panel made of wood or similar materials, in particular a composite panel with a light structure provided with an intermediate layer interposed between a first layer and a second layer, comprising forming seat means in an edge portion of said panel, **characterised in that** after said forming there is provided injecting into said seat means a hardening expanding composition such as to, once said composition is expanded, substantially fill said seat means and form in said seat means a supporting element for an edge element that is fixable to said panel.

Owing to this aspect of the invention it is possible to provide a method for preparing to the edge-banding a panel that is not much expensive and is easy to apply.

In fact, said hardening expanding composition, for example polyurethane-based composition, is made of a particularly cheap material.

Further, said injecting is easy to implement and makes said method particularly simple.

Also, said hardening expanding composition, by expanding in said seat means, enables respective peripheral portions of said first layer and said second layer to be reinforced and connected in a more solid manner, preventing, in use, a possible detaching of said peripheral portions from said intermediate layer.

Further, said hardening expanding composition, after it has expanded and hardened, can be easily shaped and suitably profiled so as to form a wide contact surface that enables said edge element to be better supported than the supporting element of known methods, said edge element being such as also to assume shaped conformations.

Also, said hardening composition, as it is not very flexible to compression, enables said edge element to be supported better.

Lastly, said hardening composition can have a thickness such as to be able to receive threaded inserts both frontally and laterally.

In a second aspect of the invention a machine is provided for preparing to the edge-banding a panel made of wood or similar materials, in particular a composite panel with a light structure provided with an intermediate layer interposed between a first layer and a second layer, comprising forming means for forming in an edge portion of said panel seat means, **characterised in that** said machine comprises injecting means for injecting into said seat means a hardening expanding composition such as to, once said composition is expanded, substantially fill said seat means and form in said seat means a supporting element for an edge element that is fixable to said panel.

Owing to this aspect of the invention it is possible to provide a machine for preparing to the edge-banding a panel that is cheaper and easier to make than are known machines.

In fact, said machine does not need the cutting means, the glue distributor and the pressing roller that made known machines particularly expensive and complex to make.

The invention can be better understood and implemented with reference to the attached drawings that illustrate some embodiments thereof by way of non-limiting example, in which:

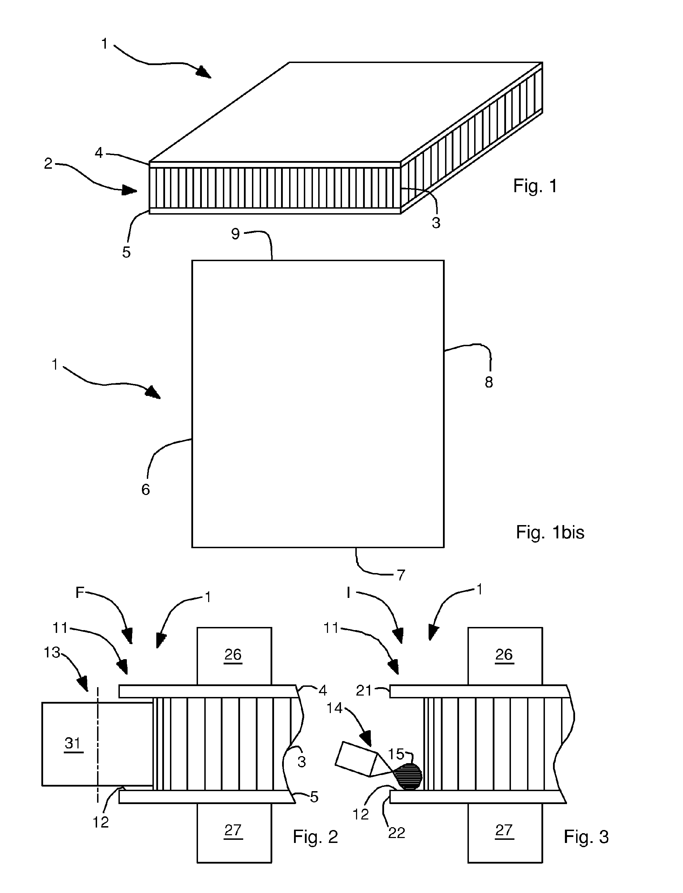

Figure 1 is a schematic perspective view of a composite panel with a light structure;
Figure 1bis is a schematic plan view of the panel in Figure 1;
Figures 2 to 5 are schematic front views of operating steps included in a method for preparing the panel in Figure 1 to the edge-banding;
Figure 6 is a schematic front view of a squaring step included in a method for edge-banding the panel in Figure 1;
Figure 7 is a schematic front view of an edge-banding step included in the method for edge-banding the panel in Figure 1;
Figure 8 is a schematic front view of a further squaring step included in the method for edge-banding the panel in Figure 1;
Figure 9 is a schematic front view of a further edge-banding step included in the method for edge-banding the panel in Figure 1;
Figure 10 is a schematic plan view of a machine for preparing to the edge-banding the panel in Figure 1;
Figure 11 is a schematic plan view of a machine for preparing to the edge-banding the panel in Figure 1 in a further embodiment;
Figure 12 is a schematic plan view of a plant for edge-banding the panel in Figure 1;
Figure 13 is a schematic plan view of a work step of a plant for edge-banding the panel in Figure 1 in a further embodiment;
Figure 14 is a schematic plan view of a further work step of the plant in Figure 13.

With reference to Figures 1 and 1bis, there is shown a panel 1, which is usable for making furniture, shelving, shelves, doors and the like, comprising a layer or "sandwich" structure 2.

The structure 2 comprises an intermediate layer 3 interposed between a first external layer 4 and a second external layer 5, which are substantially flat and mutually opposite, made of wood or similar materials.

The intermediate layer 3 is made of a filling material, made of wood or similar materials, such as, for example, sheets of cardboard having a honeycomb structure, that is lighter and less resistant than the material used for making the first layer 4 and the second layer 5.

With reference to Figures 2 to 5 there is illustrated a method for preparing to the edge-banding the panel 1 which has been previously cut to size.

As already mentioned, preparing the panel 1 to the edge-banding is defined as the machinings to be performed on a first perimetrical side 6, a second perimetrical side 7, a third perimetrical side 8 and a fourth perimetrical side 9 of less thickness of the panel 1 before a decorative edge element 10 is applied to the panel 1, for example a strip or band of plastics or similar materials.

This method initially provides a forming step F, illustrated in Figure 2.

In the forming step F forming in sequence is provided, by forming means 13, in the first perimetrical side 6, in the third perimetrical side 8, in the second perimetrical side 7 and in the fourth perimetrical side 9 substantially at an edge portion 11 of the panel 1, a respective seat 12, extending substantially longitudinally and having a substantially rectangular cross section.

In particular, this forming comprises milling the intermediate layer 3 by a milling cutter 31 included in the forming means 13.

In an embodiment of the invention that is not shown, this milling comprises partially milling also the first layer 4 and/or the second layer 5.

In a further embodiment of the invention that is not shown, this forming comprises compressing, for example by a pressing element, which is not shown, the intermediate layer 3.

After the forming step F, this method comprises an injection step I, shown in Figure 3, in which injecting a hardening expanding composition 15, for example a polyurethane-based hardening expanding composition 15, is provided into the seats 12 by injecting means 14.

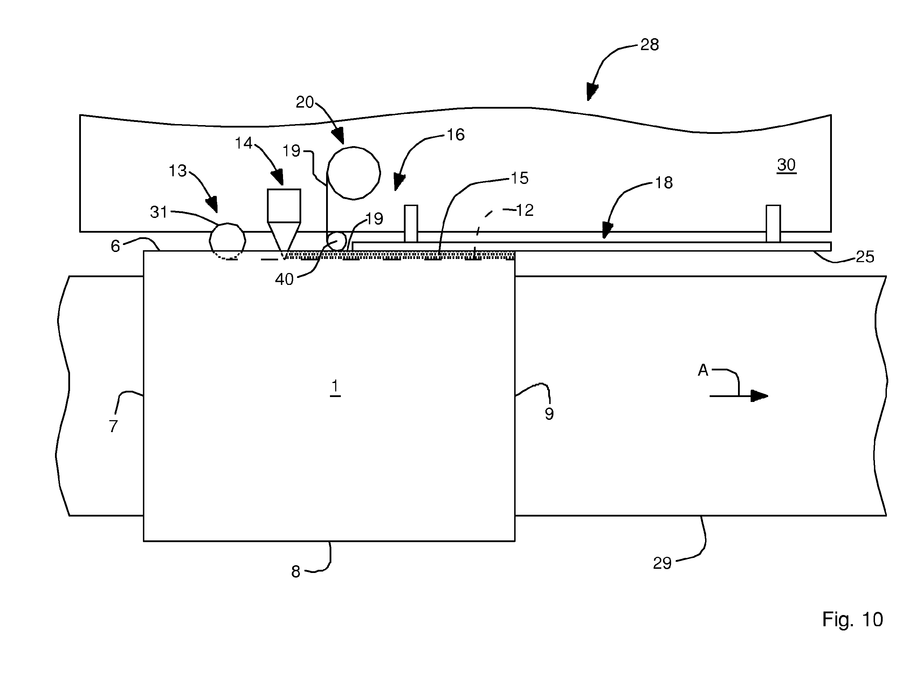

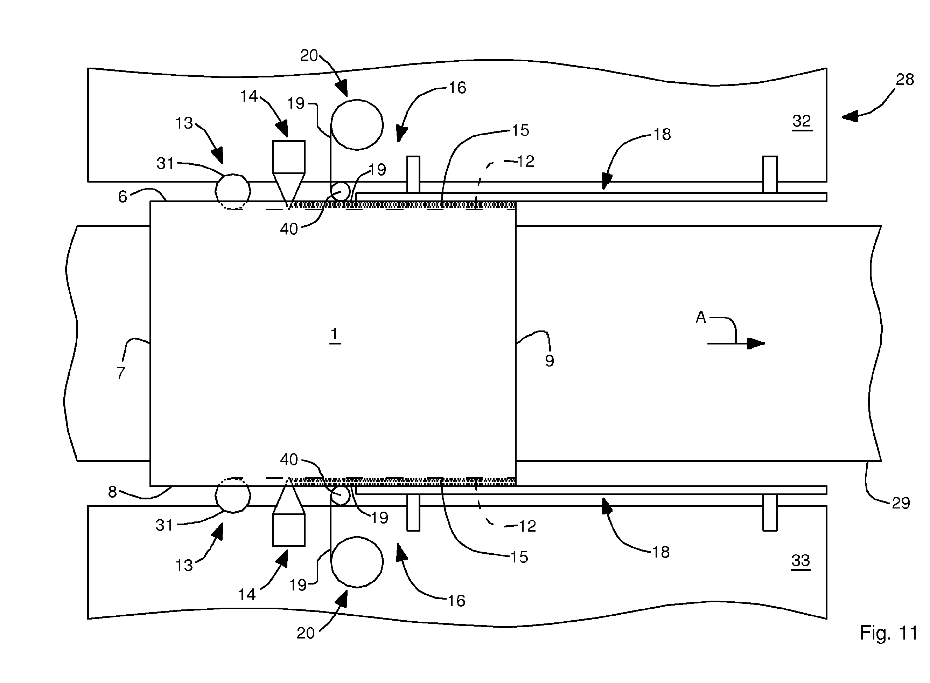

In particular, as shown in Figures 10 and 11, the injection step I occurs with the panel 1 moving along an advance direction A and the injecting means 14 fixed.

In an embodiment of the invention that is not shown, the injection step I occurs with the panel 1 and the injecting means 14 in movement, the injecting means 14 moving in an opposite direction to the panel 1.

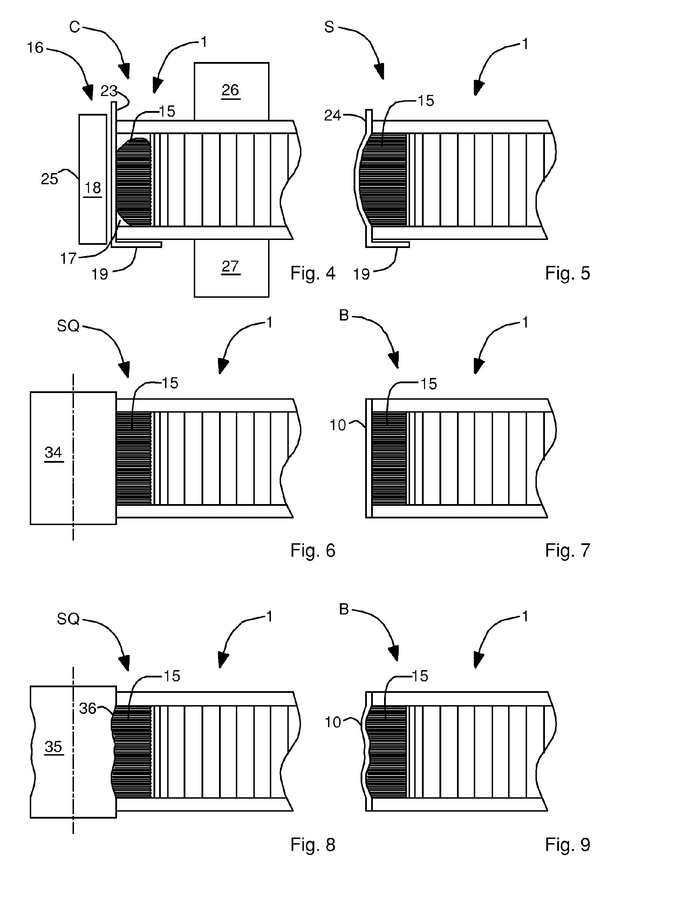

After the injection step I, this method comprises a containing step C, shown in Figure 4, in which the composition 15 injected by the injecting means 14 is prevented from exiting the seats 12 in an expanding/hardening step of the composition 15.

In the containing step C containing means 16 is used that is positioned laterally with respect to the panel 1 and comprises a containing element 19, for example a strip of adhesive paper, arranged for preventing the composition 15 from dirtying respective head portions 21, 22 (Figure 3) of the first layer 4 and of the second layer 5.

In particular, the containing element 19, suitably dispensed by dispensing means 20, illustrated schematically in Figures 10 and 11, is fixed to the head portions 21, 22 by roller means 40 and comprises a first face 23 facing the seat 12.

In this manner, between the seat 12 and the first face 23 a chamber 17 is defined, extending substantially longitudinally, arranged for containing and being filled by the hardening expanding composition 15.

The containing means 16 further comprises abutting means 18 facing a second face 24, opposite the first face 23 of the containing element 19, and arranged for abutting, in use, the second face 24.

In this manner, in use, the containing element 19 is interposed between one of the perimetrical sides 6, 7, 8, 9 and the abutting means 18.

The abutting means 18 extends substantially parallelly to one of the perimetrical sides 6, 7, 8, 9 and is arranged for contrasting an expansion force of the hardening composition 15.

In particular, the abutting means 18 has a length that is sufficient to enable the composition 15 to harden during the passage of the panel 1.

The abutting means 18 may be fixed, as shown in Figures 10 and 11, or be movable towards or away from the panel 1 by driving means that is not shown.

In particular, the abutting means 18 may comprise an elongated element 25, or wall, as illustrated in Figures 10 and 11, or a containing belt, which is not shown, closed in a loop on respective rollers.

This method further comprises, during the forming step F, the injection step I and the containing step C, maintaining the panel 1 pressed between pressing means 26, 27, acting respectively on the first layer 4 and on the second layer 5. Again, this method comprises a solidification step S, shown in Figure 5, in which complete solidification, or hardening, and expansion of the composition 15 occurs.

The method for preparing the panel 1 to the edge-banding disclosed above is applied by a machine 28 schematically illustrated in Figure 10.

The machine 28 is arranged for being positioned laterally with respect to the panel 1, the panel 1 being moved along the advance direction A by conveying means 29.

The machine 28 comprises a support 30 extending substantially parallelly to the advance direction A and supporting, one after the other along the advance direction A, the forming means 13, the injecting means 14, the dispensing means 20 and the abutting means 18.

In this manner, in use, the machine 28 can prepare to the edge-banding, in sequence, the first perimetrical side 6, the third perimetrical side 8, the second perimetrical side 7 and the fourth perimetrical side 9.

In a further embodiment, shown in Figure 11, the machine 28 can simultaneously prepare to the edge-banding two of the perimetrical sides 6, 7, 8, 9, for example the first perimetrical side 6 and the third perimetrical side 8 and subsequently the second perimetrical side 7 and the fourth perimetrical side 9.

In this further embodiment, the machine 28 comprises a pair of supporting elements 32, 33 positioned laterally and on opposite sides with respect to the panel 1.

Such supporting elements 32, 33 are substantially structurally and functionally similar to the support 30 and each support, one after the other along the advance direction A, the forming means 13, the injecting means 14, the dispensing means 20 and the abutting means 18.

With reference to Figures 6 to 9, there is shown a method for edge-banding the panel 1 comprising the steps disclosed above for preparing the panel 1 to the edge-banding.

This method for edge-banding the panel 1 comprises, after the solidification step S disclosed above, a squaring step SQ, shown in Figure 6, in which the panel 1 is squared, or ground, by a further milling cutter 34.

In particular, this squaring comprises squaring in sequence the first perimetrical side 6, the third perimetrical side 8, the second perimetrical side 7 and the fourth perimetrical side 9.

After the squaring step SQ, this method comprises an edge-banding step B, shown in Figure 7, in which the edge element 10 is fixed, in particular glued, and subsequently machined on the first perimetrical side 6, on the third perimetrical side 8, on the second perimetrical side 7 and on the fourth perimetrical side 9.

In one embodiment of the invention, illustrated in Figure 8, the squaring step SQ comprises shaping, by a shaped milling cutter 35, the first perimetrical side 6, the second perimetrical side 7, the third perimetrical side 8 and the fourth perimetrical side 9 with a desired profile so as to form a wide contact surface 36 for the edge element 10, which can in this manner assume shaped conformations.

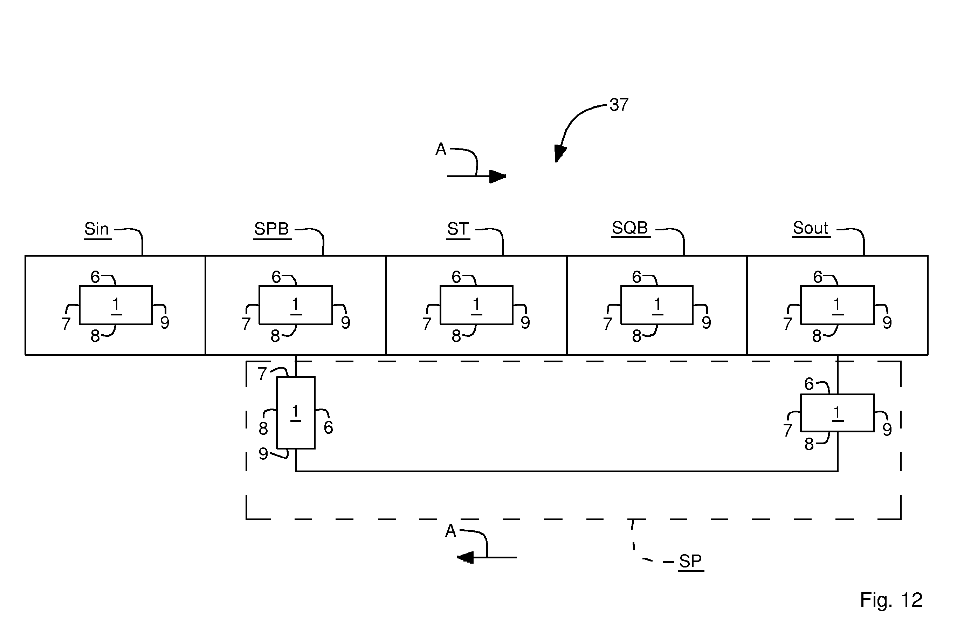

The method disclosed above for edge-banding the panel 1 is applied by a plant 37, illustrated in Figure 12.

The plant 37 comprises an inlet station Sin in which the panel 1 to be edge-banded is positioned.

The plant 37 further comprises, downstream of the inlet station Sin with respect to the advance direction A, an edge-banding preparation station SPB, in which the machine 28 disclosed above is positioned, for example in the embodiment for preparing simultaneously to the edge-banding a pair of opposite perimetrical sides 6, 7, 8, 9.

The plant 37 further comprises, downstream of the edge-banding preparation station SPB with respect to the advance direction A, a transferring station ST.

In the transferring station ST the composition 15 is solidified completely and, after the composition 15 is solidified, the panel 1 is transferred to a squaring edge-banding station SQB in which the first perimetrical side 6, the third perimetrical side 8, the second perimetrical side 7 and the fourth perimetrical side 9 are squared and subsequently edge-banded with the edge element 10.

The plant 37 further comprises, downstream of the squaring edge-banding station SQB, an outlet station Sout in which it is possible to remove the panel 1.

Lastly, the plant 37 comprises a positioning station SP, illustrated with a dashed line, arranged for receiving the panel 1 exiting the outlet station Sout, for rotating the panel 1 by 90° and for positioning the panel 1 in the edge-banding preparation station SPB.

In other words, the positioning station SP connects the outlet station Sout to the edge-banding preparation station SPB.

In use, the panel 1 is positioned on the inlet station Sin.

Subsequently, the panel 1 traverses the edge-banding preparation station SPB, in which, for example, the first perimetrical side 6 and the third perimetrical side 8 are prepared to the edge-banding.

Still subsequently, the panel 1 passes through the transferring station ST, in which the composition 15 is completely solidified in the first perimetrical side 6 and in the third perimetrical side 8, after which the panel 1 traverses the squaring edge-banding station SSQ where the first perimetrical side 6 and the third perimetrical side 8 are first squared and then edge-banded.

Still subsequently, the panel 1 is conveyed to the outlet station 1.

Subsequently, the panel 1 passes through the positioning station SP that rotates the panel 1 by 90° and positions the panel 1 in the edge-banding preparation station SPB in which the second perimetrical side 7 and the fourth perimetrical side 9 are prepared to the edge-banding.

Still subsequently, the panel 1 again passes through the transferring station ST in which the composition 15 is completely solidified in the second perimetrical side 7 and in the fourth perimetrical side 9, after which the panel 1 again traverses the squaring edge-banding station SQB, where the second perimetrical side 7 and the fourth perimetrical side 9 are first squared and then edge-banded.

Subsequently, the panel 1 is conveyed to the outlet station 1 from which it can be removed, for example by an operator.

In an embodiment of the invention that is not shown, instead of the positioning station SP an operator is used who removes the panel 1 from the outlet station Sout, rotates the panel 1 by 90° and positions the panel 1 in the edge-banding preparation station SPB.

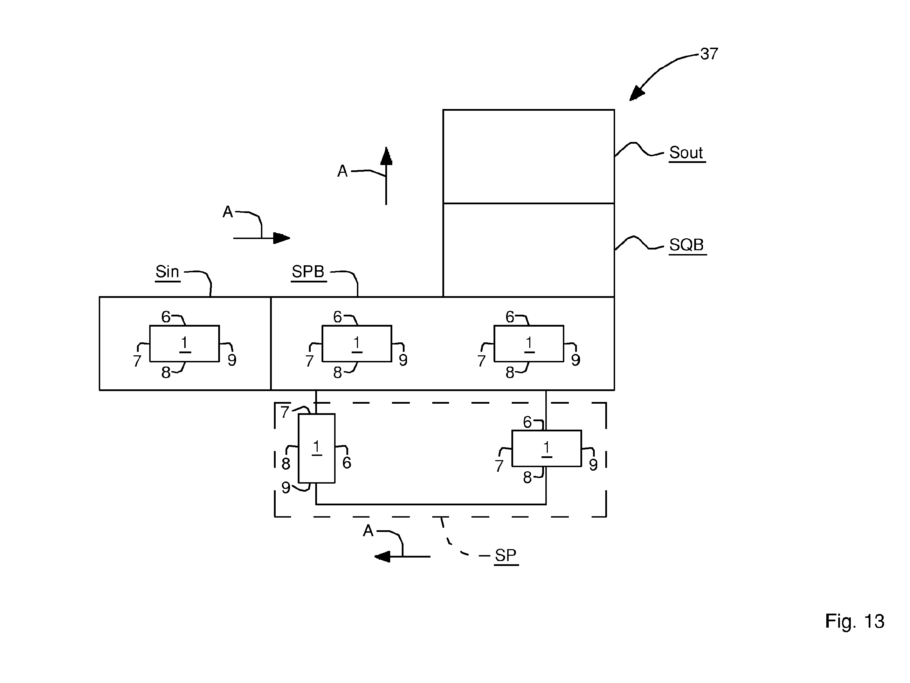

With reference to Figure 13 there is shown a further embodiment of the plant 37 in which the transferring station ST is not provided and the positioning station SP connects an outlet of the edge-banding preparation station SPB to an inlet of the edge-banding preparation station SPB.

In this further embodiment, in use, the panel 1 is positioned on the inlet station Sin.

Subsequently, the panel 1 traverses the edge-banding preparation station SPB, in which the first perimetrical side 6 and the third perimetrical side 8 are prepared to the edge-banding.

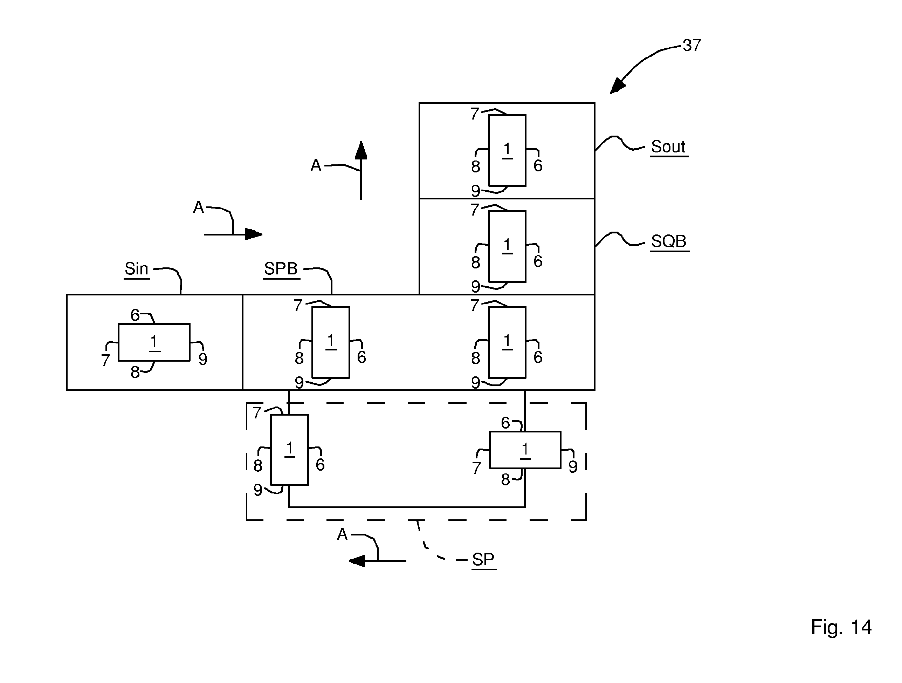

Still subsequently, the panel 1 is conveyed from the outlet of the edge-banding preparation station SPB to the positioning station SP in which the panel 1 is rotated by 90° (Figure 13) and subsequently repositioned in the inlet of the edge-banding preparation station SPB in which the second perimetrical side 7 and the fourth perimetrical side 9 (Figure 14) are prepared to the edge-banding.

It should be noted how in this further embodiment of the plant 37 the complete solidification of the composition 15 in the first perimetrical side 6 and in the third perimetrical side 8 occurs during traversing of the positioning station SP and during preparing of the second perimetrical side 7 and of the fourth perimetrical side 9 to the edge-banding.

Still subsequently, i.e. after all the perimetrical sides 6, 7, 8, 9 have been prepared to the edge-banding in the edge-banding preparation station SPB, the panel 1 again traverses the squaring edge-banding station SQB where initially the first perimetrical side 6 and the third perimetrical side 8 are first squared and then edge-banded and subsequently the second perimetrical side 7 and the fourth perimetrical side 9 are first squared and then edge-banded.

Subsequently, the panel 1 is conveyed to the outlet station Sout from which it can be removed, for example by an operator.

It should be noted how the method disclosed above for preparing the panel 1 to the edge-banding is not much expensive and is easy to apply.

In fact, the composition 15 is made of a particularly cheap material.

Further, the injection step I disclosed above is easy to implement and makes this method particularly simple.

Also, the hardening composition 15, by expanding in the seat 12, enables the first layer 4 and the second layer 5 to be reinforced and connected in a more firmly manner at the edge portion 11, preventing, in use, a possible detachment of the edge portion 11 of the first layer 4 and of the second layer 5 from the intermediate layer 3.

Further, the hardening composition 15, after it has expanded and hardened, can be easily shaped and suitably profiled such that the contact surface 36 is sufficiently wide to support better the edge element 10, the edge element 10 thus being able to assume shaped conformations.

Again, the hardening expanding composition 15, not being very flexible to compression, enables the edge element 10 to be supported better.

Lastly, the hardening expanding composition 15 can have a thickness that is such as to be able to receive both frontally and laterally threaded inserts for hardware elements, such as, for example, hinges or handles.

Also, it should be noted how the machine 28 for preparing the panel 1 to the edge-banding is cheaper and easier to make than known machines.

## Claims

1. Method for preparing to the edge-banding a panel (1) made of wood or similar materials, in particular a composite panel (1) with a light structure provided with an intermediate layer (3) interposed between a first layer (4) and a second layer (5), comprising forming in an edge portion (11) of said panel (1) seat means (12), **characterised in that** after said forming there is provided injecting into said seat means (12) a hardening expanding composition (15) such as to, once said composition (15) is expanded, substantially fill said seat means (12) and form in said seat means (12) a supporting element for an edge element (10) that is fixable to said panel (1).

2. Method according to claim 1, wherein said injecting comprises moving said panel (1) along an advance direction (A) and maintaining injecting means (14), arranged for performing said injecting, fixed with respect to said advance direction (A), or moving said panel (1) and said injecting means (14) towards one another along said advance direction (A).

3. Method according to any preceding claim, wherein said forming comprises milling or compressing said intermediate layer (3).

4. Method according to any preceding claim, wherein after said injecting there is provided preventing said composition (15) from exiting said seat means (12), said preventing comprising contrasting by abutting means (18) an expansion force of said composition (15).

5. Method according to claim 4, wherein said preventing comprises fixing a containing element (19) to head portions (21, 22) of said first layer (4) and of said second layer (5), said containing element (19) forming with said seat means (12) chamber means (17) suitable for containing and being filled by said composition (15).

6. Method according to any preceding claim, and comprising maintaining said panel (1) pressed between pressing means (26, 27).

7. Method according to any one of claims 4 to 6, and comprising, after said preventing, solidifying said composition (15).

8. Method according to any preceding claim, wherein said composition (15) is a polyurethane-based composition.

9. Method for edge-banding a panel (1) made of wood or similar materials, in particular a composite panel (1) with a light structure provided with an intermediate layer (3) interposed between a first layer (4) and a second layer (5), comprising, before said edge-banding, said preparing said panel (1) to the edge-banding according to any preceding claim.

10. Method according to claim 9, wherein after said preparing to the edge-banding, milling said edge portion (11) is provided, said milling comprising shaping or squaring, or grinding, said edge portion (11).

11. Method according to claim 10, wherein after said milling, fixing an edge element (10) to said edge portion (11) is provided.

12. Machine (28) for preparing to the edge-banding a panel (1) made of wood or similar materials, in particular a composite panel (1) with a light structure provided with an intermediate layer (3) interposed between a first layer (4) and a second layer (5), comprising forming means (13) for forming in an edge portion (11) of said panel (1) seat means (12), **characterised in that** said machine (28) comprises injecting means (14) for injecting into said seat means (12) a hardening expanding composition (15) such as to, once said composition (15) is expanded, substantially fill said seat means (12) and form in said seat means (12) a supporting element for an edge element (10) that is fixable to said panel (1).

13. Machine (28) according to claim 12, wherein said injecting means (14) is fixed or movable along said advance direction (A).

14. Machine (28) according to claim 12, or 13, and comprising containing means (16) for preventing said composition (15) from exiting said seat means (12).

15. Machine (28) according to any one of claims 12 to 14, and comprising pressing means (26, 27) acting on said first layer (4) and on said second layer (5) to maintain said panel (11) pressed.

16. Plant (37) for edge-banding a panel (1) made of wood or similar materials, in particular a composite panel (1) with a light structure provided with an intermediate layer (3) interposed between a first layer (4) and a second layer (5), comprising an edge-banding preparation station (SPB) for preparing to the edge-banding said panel (1), said edge-banding preparation station (SPB) being provided with the machine (28) as claimed in any one of claims 11 to 14.

17. Plant (37) according to claim 16, and comprising an inlet station (Sin) for receiving said panel (1) to be edge-banded, a squaring edge-banding station (SQB) for squaring and edge-banding said edge portion (11) and an outlet station (Sout) in which it is possible to remove said panel (1).

18. Plant (37) according to claim 16, or 17, and comprising a transferring station (ST) to enable a hardening expanding composition (15) injected into said panel (1) to solidify and transfer said panel (1) from said edge-banding preparation station (SPB) to said squaring edge-banding station (SQB).

19. Plant (37) according to any one of claims 16 to 18, and comprising a positioning station (SP) arranged for rotating said panel (1) substantially by 90°, said positioning station (SP) connecting said outlet station (Sout) to said edge-banding preparation station (SPB) for receiving from said outlet station (Sout) said partially edge-banded panel (1) and for delivering said partially edge-banded panel (1) to said edge-banding preparation station (SPB), or connecting an outlet of said edge-banding preparation station (SPB) to an inlet of said edge-banding preparation station (SPB) for receiving from said outlet said panel (1) that has been partially prepared to the edge-banding and for delivering said panel (1) that has been partially prepared to the edge-banding to said inlet to enable said edge-banding preparation station (SPB) to complete said preparation to the edge-banding.
